# EUROPEAN PATENT APPLICATION

(11) **EP 3 483 757 A1**
(43) Date of publication of application: **15.05.2019**
(21) Application number: 16908264.1
(22) Date of filing: 07.07.2016
(51) Int. Cl.: G06F 19/00

(54) **COMPUTER-IMPLEMENTED CRYSTAL STRUCTURE SEARCH METHOD**

(71) Applicant: Oganov, Artem Romaevich, Moscow 117519 (RU)
(72) Inventor: ALLAHYARI, Zahed Shamsollah, Moskovskaya oblast g. Dolgoprudny 141700 (RU); OGANOV, Artem Romaevich, Moskovskaya oblast g. Dolgoprudny 141700 (RU)
(74) Representative: Small, Gary James
(86) International application number: PCT/RU2016/000421
(87) International publication number: WO 2018/009090

(57) **Abstract**

The invention relates to crystal structure prediction methods. The essence of the invention is that chemical space is constructed such that chemical elements therein are arranged by their Mendeleev numbers or by values of electronegativity and atomic radius. In the first stage, depending on the initial conditions of complexity, the chemical search space is constructed, so that it includes all compositions allowed by the initial conditions, the maximum allowed complexity being specified by the user. Also in the first stage, optimization properties and/or criteria are set. Search is conducted at each point in the resultant space using global optimization, e.g. using evolutionary algorithms. The results of the search pertaining to different points of the compositional space are compared with certain periodicity and then, on the basis of the results of the comparison, a new set of points sampling the compositional space is generated. This is done by rejecting the least promising points and combining some of the most promising points using transmutation or hybridization operations. New searches are launched both in random regions of the compositional space, and in regions resulting from a relatively conservative substitution, where an element is substituted by its close analogue, where the criterion of closeness of the elements is the closeness of their Mendeleev numbers or the closeness of points corresponding thereto in an atomic radius-electronegativity space. The above-described co-evolutionary search is repeated until the best results remain unchanged for a sufficient number of iterations. The technical result is a significant increase in efficiency of this Mendeleev search.

## Description

The present invention relates to the field of crystallography, and more particularly to the field of computer-implemented method of modeling and predicting crystal structures. The claimed method can be applied to the design of new materials with desired properties for specific purposes, a search for stable crystal structures of families of compounds, the study of stability under various non-ambient conditions, etc.

The crystal structure prediction problem is the central problem of theoretical crystallography.

Until 2006, this problem did not have any general solution - there was no sufficiently universal algorithm to identify stable compounds. USPEX method (Universal Structure Predictor:. Evolutionary Xtallography) became the first such method. It is based on the use of the ideas of evolution. In the first stage, one has to specify the set of elements, and, if necessary, specific conditions, such as stopping criteria for the search process, the desired properties, type of compound, etc. Next, based on input data, initial structures are generated in a random way, subject to specified conditions and belonging to allowed chemical compositions. Then, iterative optimization of the structure with the condition of minimizing the free energy - the parameter characterizing structural stability, new set of structures is obtained from the old by the use of a given set of operations - evolutionary algorithms are used for optimization purposes. The method allows one to find with high reliability all stable structure for a given set atoms. The disadvantages of the original method (see. PCT application WO 2007071095 A, publ. 28.06.2007) include a limited number of atoms, relatively (as compared with modern methods) low efficiency, the possibility of predicting structures with a limited set of pre-specified elements

The effectiveness of the USPEX method has shown great future for applications of evolutionary methods, which encouraged their development. This has led, inter alia, to unite with the success of the previously used metadynamics methodmetadynamics. The essence of the new method is that the evolutionary optimization is made not for the space of chemical elements, but for the space of parameters in the expression of the free energy surface, such as bond lengths, torsion angles, and others. This method is called evolutionary metadynamics (Zhu, Qiang , et al "Generalized evolutionary metadynamics for sampling the energy landscapes and its applications." Physical Review B 92.2 (2015). 024 106). Despite high efficiency, this method, just like originalUSPEX, has a significant drawback - the inability to find structures with an unknown set of atoms.

Today it is also known many other modifications USPEX method (see. E.g. US patent 9,009,009 B2, publ. 14.04.2005, PCT Application WO 2014004370 A1). However, all these modifications are aimed at optimizing the speed, but do not provide the ability to search among all the possible compounds.

A number of attempts to copy the techniques of the original USPEX method are known too (e.g., Wang, Yanchao, et al "CALYPSO: A method for crystal structure prediction.". Computer Physics Communications 183.10 (2012): 2063-2070). However, all such methods inherit disadvantages of the original USPEX method - the inability to search for compounds with different combinations of atoms, or search the entire space of the chemical elements.

The closest analog of the present invention is a method (Cerqueira, Tiago FT, et al "Materials design on-the-fly." Journal of chemical theory and computation 11.8 (2015). 3955-3960), which combines the structural search Minima Hopping method with evolutionary search in the space of chemical compositions (hereinafter, for brevity we shall call this method Minima Hopping). In this method, there is an ability to find crystal structures with desired properties in the whole space of possible combinations of defined chemical elements, or even in the whole space of chemical compounds in general. However, this method has significant disadvantages - high complexity and heavy computing costs combined with a relatively low probability of detecting the optimal elements and compounds, and this approach virtually ignores the stability of the compounds found.

The shortcomings of the closest prior method are primarily due to the fact that the elements in the chemical space are arranged by their sequential number. This greatly reduces the effectiveness of evolutionary algorithms as chemical space loses a simple structure, and materials with similar properties are located in completely different regions of the chemical space (e.g. chromium, molybdenum, tungsten), while quite different compound (e.g. fluorine, neon, and sodium) are located near each other.

Another important disadvantage is that due to its design features, Minima Hopping cannot sample different ratios of the same elements. For example, if it finds MnB, it will very likely not find MnB4. This greatly reduces the chances of finding the desired material.

An important disadvantage of the Minima Hopping method is lack of consideration of stability of predicted compounds and their decomposition.

The objective of the present invention is to provide a computer-implemented method of searching for stable crystal structures with desired properties as a result of searching in the entire space of possible chemical compounds.

The technical result provided by the comparison with the closest analogue may be formulated as the increasing speed and reliability of the search. The invented method works at least 10 times faster than the closest analogue, finding greater number of stable compounds and accounting for their stability. Also, present method allows to optimize multiple properties, which is not allowed in Minima Hopping.

The technical problem is solved and the result is achieved that:
A computer-implemented method for predicting crystal structures, following a sequence of steps, performed by a processor, includes:
entering the initial data, which consist of at least one property to optimize, and at least the maximum level of complexity of the systems;
in one variant, the construction of the chemical space formulations of dimension N, where N - maximum level of complexity of the systems, the axes of which are arranged all the chemical elements and / or complex ions according to the values of their Mendeleev numbers, each point of the chemical space contains all compositions formed by the corresponding elements, with all possible crystalline structures;
in another variant of the construction of chemical space, dimensionality of the space is 2N, wherein N - maximum level of complexity of the systems, the axes of which are arranged all the chemical elements and / or complex ions according to their position in space atomic radius, electronegativity, each point of the chemical space containing all compositions formed by the corresponding elements, with all possible crystal structures;
performing evolutionary searches at randomly selected points in the chemical space;
carrying out a cycle of actions, which include:
   ranking the search results by the fitness (i.e. correspondence to target property);
   construction, based on the fittest obtained systems, of new points in the chemical space, and in addition to this, a number of random points in the chemical space will be added;
   if the found optimal chemical compositions do not vary over a sufficiently large number of iterations, the calculation is stopped; otherwise, it continues;

In this method, properties for optimization may be physical properties, in particular electrical, optical, thermal properties, hardness, fracture toughness, elastic moduli or thermodynamic stability, or combinations thereof, wherein in the case of selecting multiple properties, Pareto optimization is performed.

The method is also characterized in that the input of initial data may also include a list of the chemical elements and / or complex ions, of which the space is formed chemical compositions;
The method is also characterized in that new chemical systems are obtained based on the fittest chemical systems as a result of the following operations:
Transmutation: AB-AC, where C - element close to B in the Mendeleev number space, or in the space of atomic radius and electronegativity;
first crossover: AB + CD - »AC or BD
second crossover: AB + CD-> AF, where F - element lying between B and D or between C and D in the space of Mendeleev numbers, or in the space of atomic radius and electronegativity;
The method is also characterized in that the initial data may further include: - type of calculation;
- the number of simultaneously considered systems;
- population size in each evolutionary run for each system and weights of variation operators;
- duration of calculation for each system, after which the fittest systems are selected to create new chemical systems;
- parameters for structure relaxation and calculations of the energy and properties of the structures;
The invention consists in the computer-implemented method comprising the steps made by using the processor, characterized in that:
In the construction of the space, chemical elements are ranked by the value of their Mendeleev numbers in one variant of the method, or by the values of their atomic radius and electronegativity in another embodiment.

In the first stage, depending on the specified maximum allowed complexity, chemical space is formed to include all compounds permitted by the specified conditions. Thus, the user can limit the search to a simple, binary, ternary or more complex systems.

Also in the first stage, the user specifies which properties (one or more properties) should be optimized. As these properties and / or criteria may be selected, e.g., hardness, or stability, or optical, or electrical, or other properties which are determined by the crystal structure.

Search is performed at every sampled point of the resulting space with the use of evolutionary algorithms.

With certain periodicity, results of searches in different points of the chemical space are compared, ranked, and used to generate new chemical systems to sample. The least promising (least fit) previously sampled systems are discarded, while from the fittest systems, through transmutation or crossover operations, new chemical systems are generated New searches run in also random areas compositions space and in areas resulting from relatively conservative substitutions, wherein an element is replaced by its close analog (e.g., BN -> CN), wherein two elements are considered close either in the space of Mendeleev numbers (first option), or in the space of atomic radius and electronegativity (second embodiment).

The above-described co-evolutionary search is repeated until the result reaches invariability for a sufficient number of iterations, the threshold number for which can be set initially as input for the calculation.

The above features and advantages of the present invention and methods of achieving them will become more apparent after reading the description of examples of their implementation with reference to the drawings, among which:
Figure 1 - Table of correspondence between Mendeleev numbers and chemical elements.
Figure 2 - flowchart of the claimed method.
Figure 3 - drawing explaining the claimed process.
Figure 4 - drawing explaining the claimed process.

For the purposes of further description it is necessary to explain some of the terminology and definitions.

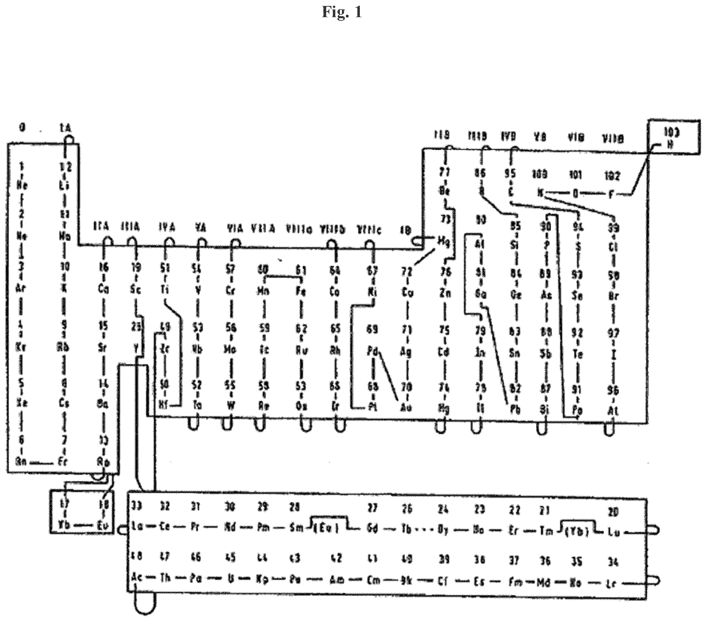

Mendeleev number (not to be confused with sequential numbers of the elements in the Periodic Table), in other sources called "periodic numbers" - numbers that characterize the physical and chemical properties of chemical elements. First obtained for the elements empirically in 1984 by Prof. David Pettifor (see. Pettifor, DG (1984). A chemical scale for crystal-structure maps. Solid state communications, 51 (1), 31-34). For the purposes of the present invention, a valid physical meaning was given to Mendeleev numbers. It has been found a good scale of Mendeleev numbers can be derived from Pauling electronegativities and atomic radii. For purposes of this invention, the atomic radii may be determined as half the shortest interatomic distances in a theoretically relaxed chosen (e.g., primitive cubic) structure for all pure elements. At the same time, to one skilled in the art it is clear that other methods of defining the atomic radii are possible. Examples of Mendeleev numbers are shown in Figure 1. Values of Mendeleev numbers can be found from the correlation graphs atomic radius - electronegativity. There is also a related parameter - chemical scale, which can also be found using the correlation graph atomic radius - electronegativity, and has a similar physical meaning. Thus, for purposes of further description, the term "Mendeleev number" should be understood (unless indicated otherwise) not only directly as Mendeleev number, but also as chemical scale.

Mendeleev search - a term first coined by the inventors and mentioned on a number of scientific conferences, as well as in scientific and popular articles and interviews (see Oganov, Artem "Discovering new materials and new phenomena with evolutionary algorithms." APS Meeting Abstracts 2016.... , open lectures ITF 2016, the performance of A. Oganov - http://fea.ru/news/6384, etc.). This notion describes a new feature in crystal structure prediction and materials discovery and design - search for combinations of all elements of the Periodic Table (and, if necessary, search may include also complex ions). Due to the repeated mention in high-profile conferences, the term may be considered as prior art.

For purposes of this description, the term "evolutionary search" should be interpreted as widely as possible (if not stated otherwise) and include not only traditional evolutionary algorithms, but also all derivatives of evolutionary algorithms, such as particle swarm optimization, artificial bee colony methods, coevolutionary methods, etc. For a specialist, based on the below further description it will be evident that such a broad interpretation is justified and instead of classical evolutionary algorithms, present invention may well use derivatives of evolutionary algorithms.

For the purposes of this description, the term "chemical elements" or "elements of the chemical space" we understand (unless indicated otherwise) not only directly elements of the Periodic Table, but also complex ions (such as (C03)2-, (OH)- , etc.) and / or constituents such as constituent simple oxides in the case of the search for complex oxides, silicates, etc. For someone skilled in the art, based on the below description it will be evident that such an extension of the concept of "chemical element" is valid and does not affect the realizability of the present invention, as well as the achievement of the claimed technical result.

Consider the examples of the present invention.

All steps of the claimed method described below are performed using the processor and include actions performed by means of the digital signal processor.

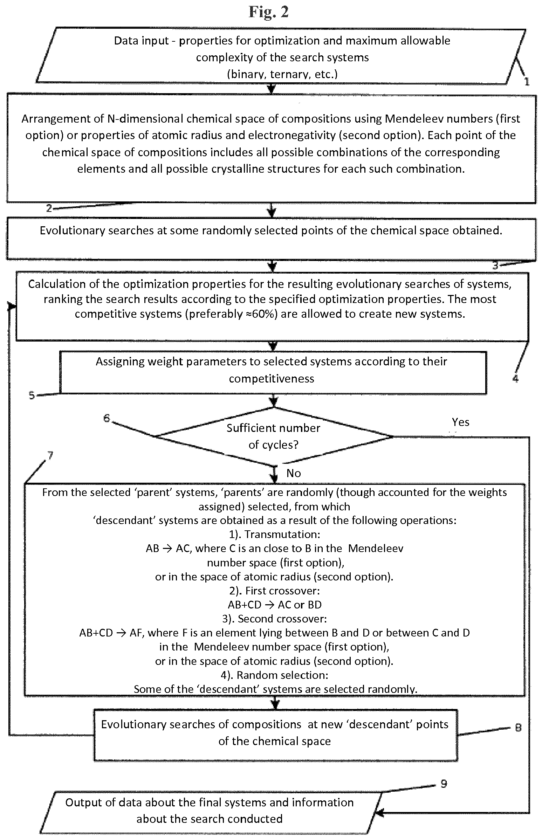

Figure 2 is a block diagram of the claimed method. Numbers refer to the stages of calculation. In the first stage 1, directly before starting the simulation algorithm, input data, optimization criteria and stoppage criteria are required. As initial data, one must specify the maximum complexity of chemical systems. For example, you can specify binary (AnBm), ternary (AnBmCi) or more complex systems. Also, when specifying the initial data, one can artificially limit the number of chemical elements (e.g., one can specify a list of oxides of rare earth elements or compounds of alkali metals only). This can be useful if we have an idea where to find the required compound or seek to design materials for production purposes, keeping in mind limited supply and high price of rare elements.. The optimization criteria may be crystal structure-related properties of the material. The criteria may be, for example, electrical, optical, thermal or other properties, or hardness, fracture toughness, elastic moduli, or stability criteria. One can optimize these properties under specific conditions, and/or optimize several properties at the same time. For the specialist, on the basis of the following description, it will be clear that the list of criteria for optimization is open. As a stoppage criterion in this type of algorithms one usually specifies the number of iterations, during which the optimal chemical system remains unchanged.

However, other choices are possible, such as the total number of cycles, or target value of any optimization target.

In the second step 2, using the specified maximum complexity of chemical systems, the chemical space is defined. For this purpose, N-dimensional chemical space, where the number N - the maximum allowable complexity of compounds (N = 2 for a binary system, N = 3 for a ternary system, etc.), and all the chemical elements (or their subset specified in the initial conditions) are arranged along each axis in accordance with values of their Mendeleev numbers. In another variant, the chemical space is 2N-dimensional with axes corresponding to the atomic radii and electronegativities of all elements. It is possible to construct more complex 3N, 4N, etc. systems, where in addition to the atomic radii and electronegativity one uses other properties of chemical elements. Along with chemical elements, the space can include complex ions ((CO3)2-, (OH)-, etc) specified in the initial conditions 1. Each point in the thus obtained chemical space contains all possible compositions formed by corresponding elements, within the maximum allowable complexity, and with all possible crystal structures.

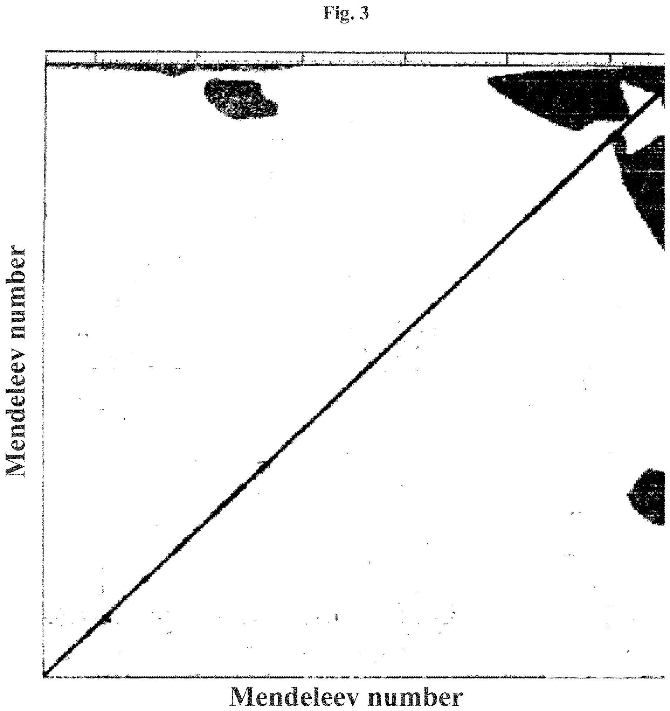

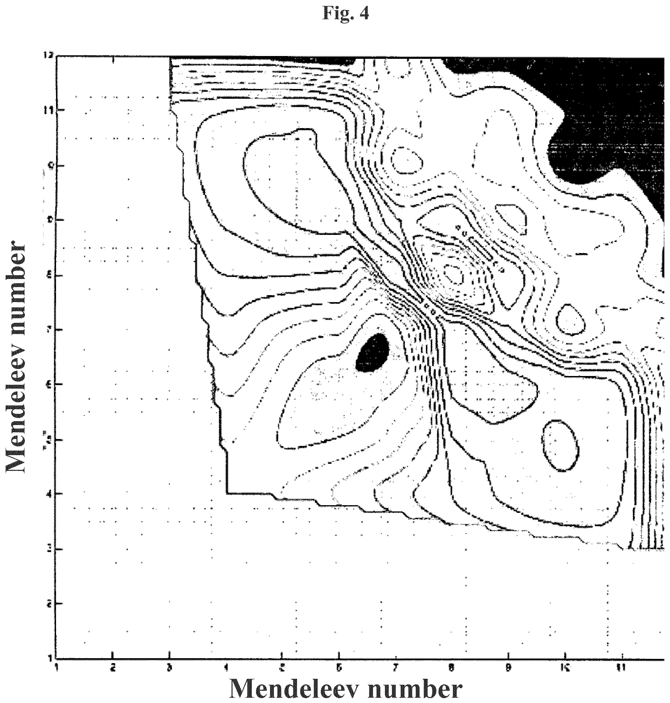

The formation and arrangement of the chemical space 2 is one of the most important steps of the present method. The arrangement of chemical elements according to their Mendeleev numbers (or pairs radius and electronegativity) provides the chemical space, in which chemical elements with similar properties are located nearby. This greatly affects the speed of discovery of novel compounds, and enables solving more complex problems than the closest analogue, minima hopping method. Special construction of chemical space allows us to utilize the power of evolutionary methods, quickly enough "cutting off" the areas with low fitness and focusing the search on the most promising areas. Confirmatory drawings are shown in FIG. 3 and FIG. 4. It is clearly seen that the described variants of chemical space are more suitable than searching in the space of sequential numbers of atoms in the periodic table, because it allows us to group promising chemical systems in a way convenient for optimization.

In the next step a set of evolutionary searches 3 are carried out in randomly selected points in chemical space. Such searches are nowadays well established (e.g., using methods USPEX, Calypso, evolutionary metadynamics et al.). For a specialist it will be apparent that crystal structure prediction at any point in the chemical space is well established for a particular set of atoms. For purposes of this invention, as well as from the viewpoint of the claimed technical result it does not matter which particular algorithm is used for this. The result of step 3 is a set of compounds that are optimized for criteria given in step 1 at selected points of chemical space. It should be noted that if in step 1 a set of properties was specified for optimization, then multiobjective optimization is to be performed. One possible way is to use the Pareto criterion (Pareto Optimization). The problem of multiobjective optimization is well described in the literature on numerical methods, and for a specialist it will be apparent that the particular chosen method of multiobjective optimization is not fundamentally important for the purposes of the claimed invention and to achieve the claimed technical result.

After results are obtained, they are analyzed in step 4. This analysis includes comparing the results and ranking them according to the set of optimization criteria from step 1. As a result of ranking, points of chemical space are assigned weights related to their fitness. After ranking, the least fit systems are marked as unpromising and discarded, while the fittest, or the most promising, points are given an opportunity to participate in the formation of a new set of points in the chemical space. Usually, we involve about 60% of the fittest systems of the current generation to produce the new generation.

At the next stage, the new points of the chemical space are generated. In such process, the points marked in step 4 as unpromising are excluded, and those deemed promising at step 4 are involved in the generation of new points through one of the three operations:
Transmutation: AB-AC, where C - element lying close to B in the chemical space (space of Mendeleev numbers, or space of radii and electronegativities of the elements).
Crossover 1: AB + CD - AC or BD
Crossover 2: AB + CD-> . AF, where F - element lying between B and D or between C and D in the chemical space (space of Mendeleev numbers, or of the radii and electronegativites of the elements).

Some of the new chemical systems (points of the chemical space) are generated randomly.

Next, in the new "child" chemical systems a number of evolutionary searches are performed 6, similar to the search in step 3.

In step 7, stoppage criteria (which were specified in step 1) are checked. In general, it is checked whether the best chemical systems remain unchanged for a certain number of iterations (4-5-6). However, as already stated, it is possible to use more sophisticated stoppage criteria.

If stoppage criteria are not met, the process returns to Step 4, but using the results of searches made in "child" space - stage of 8. Next comes the iterative repetition of steps 4-7 until the stoppage criterion specified in step 1 is met.

If the stoppage criterion set in step 1, is met, the cycle of actions 4-7 is stopped. After stopping the output of information is carried out 9. Output can contain either the whole information about the final results, or a convenient for analysis subset of information about the most promising compounds. Additionally, output can contain information about the progress of the search, history of evolution in the chemical space etc.

FIG. 3 and FIG. 4 show examples of the claimed method as figures - diagrams.

FIG. 3 - binary diagram MA-MB for the search for compounds with maximum hardness. The landscape was obtained by interpolation of the calculated data and displays the most promising regions of the chemical space (bright region - more promising, dark - less). This is an illustration of a completely ab initio search for a material with maximum hardness. In this calculation, the maximum permitted level of complexity - binary compounds, i.e., all compounds AnBₘ of the elements in the periodic table of elements. When the total number of elements of ∼ 10², the number of binary systems ∼ 5 x 10³, and each has about 10 ² possible compositions - so one talks about ∼ 5 x 10 ⁵ possible binary compounds (and for each there is an almost infinite number of possible structures). It is obvious that performing calculations for each and every system (and predicting the optimal structure for each compound) is not practically possible, however, the coevolutionary techniques contained in the claimed process makes the problem tractable. In this calculation in each coevolutionary generation we considered 10 binary systems (and each had 30 structures / compositions in each generation). The maximum theoretical hardness (89 GPa) corresponds to carbon in the diamond structure, and the calculation also found hard and superhard carbides, nitrides, borides - some of which are novel materials and are now being studied in detail. This calculation required only about 10,000 structures, which shows the enormous efficiency of the method.

FIG. 4 - pseudo-binary diagram of the search for complex oxides with minimum dielectricconstant. The landscape is obtained by interpolation of the calculated data and displays the most promising region (low values - dark color, high - light color). Illustration of simultaneous minimization of the static dielectric constant and maximization of stability of complex oxides. We considered combining only 12 simple oxides - in the sequence (corresponding to cations' Mendeleev numbers) 1- K₂0, 2- BaO, 3- SrO, 4- CaO 5 - Na₂0, 6 - Li₂0, 7 -Sc203, 8 - MgO, 9 - ZrO2, 10 - Al2O3, 11 - Ga2O3, 12 - SiO2. It can be seen that the most promising low-k materials (ie, materials with a low dielectric constant) correspond to SiO2 composition, which is actually being industrially used for this purpose in microelectronics. FIG. 4 shows that the calculation very efficiently focused on the most promising region of the chemical space, avoiding unpromising areas. It is also seen that the chemical space has topology really convenient for evolutionary optimization, having an "island of optimum properties".

Described in the present description algorithm can be written on computer readable medium for implementation of further action on it by means of the processor.

The above embodiments of the claimed method do not in any way limit the scope of the claimed invention and serve only as a confirmation of the possibility of its realization. Those skilled in the art will see other variants of the present method within the appended claims.

## Claims

1. A computer-implemented method for searching for crystal structures comprising the steps, performed by a processor comprising: input initial data, which consist of at least one property to optimize, and at least the maximum level of complexity of the systems; construction of the chemical space of dimension N, where N - maximum level of complexity of the systems, along the axes of which all the chemical elements and / or complex ions are arranged according to their Mendeleev numbers, each point of the chemical space contains for the corresponding set of chemical elements all their possible compounds, with all possible crystal structures;
evolutionary searches at randomly selected points of the chemical space;
carrying out a cycle of actions, which includes:
ranking the search results by their fitness;
generating on the basis of fitness new chemical systems, and including also several randomly selected systems;
if the chemical systems with the best fitness do not change over a sufficiently large number of iterations, the cycle is completed; otherwise, new chemical systems are generated and the cycle is repeated;

2. A computer-implemented method for searching for crystal structures comprising the steps, performed by a processor comprising: input initial data, which consist of at least one property to optimize, and at least the maximum level of complexity of the systems; construction of the chemical space of dimension 2N, where N - maximum level of complexity of the systems, along the axes of which all the chemical elements and / or complex ions are arranged according to their atomic radii and electronegativities, each point of the chemical space contains for the corresponding set of chemical elements all their possible compounds, with all possible crystal structures;
evolutionary searches at randomly selected points of the chemical space;
carrying out a cycle of actions, which includes:
ranking the search results by their fitness;
generating on the basis of fitness new chemical systems, and including also several randomly selected systems;
if the chemical systems with the best fitness do not change over a sufficiently large number of iterations, the cycle is completed; otherwise, new chemical systems are generated and the cycle is repeated;

3. Method according to claim 1-2., **characterized in** optimization of chemical or physical properties, in particular electrical, optical, thermal properties, hardness, fracture toughness or ductility parameters, elastic moduli or thermodynamic stability, or combinations thereof, wherein in the case of selecting multiple properties, multiobjective optimization is performed, e.g., using Pareto criterion.

4. A process according to claim 1-2, **characterized in that** the input of initial data may also include a list of the chemical elements and / or complex ions, from which the chemical space shall be formed;

5. Method according to claim 1-2, **characterized in that** new chemical systems are obtained based on the fittest chemical systems using the following operations:
Transmutation: AB->AC, where C - element lying close to B in the space or Mendeleev numbers or in the space of atomic radii and electronegativities;
first crossover: AB + CD-> AC or BD
second crossover: AB + CD -> AF, where F - element lying between B and D or between C and D in the space of Mendeleev numbers, or in the space of atomic radii and
electronegativities;

6. Method according to claim 1-2, **characterized in that** the initial data may further include:
- type of calculation;
- the number of concurrent systems under consideration;
- population size in each optimization for each chemical system and the weights of variation operators;
- duration of calculation for each system, after which the fittest systems are selected for creating new chemical systems;
- parameters of structure relaxation and of calculations of the energies and properties;
